# EUROPEAN PATENT APPLICATION

(11) **EP 1 439 108 A2**
(43) Date of publication of application: **21.07.2004**
(21) Application number: 03029557.0
(22) Date of filing: 22.12.2003
(51) Int. Cl.: B62B 3/18

(54) **Supermarket trolley**

(30) Priority: 14.01.2003 IT TO20030005 U
(71) Applicant: Plastimark S.p.A., 12035 Racconigi (Cuneo) (IT)
(72) Inventor: Bergia, Michelangelo, 12030 Cavallermaggiore (Cuneo) (IT)
(74) Representative: Buzzi, Franco

(57) **Abstract**

A supermarket cart (1) comprising a base (2) with wheels (7) provided with a transverse control bar (8) and bearing a basket container (3) provided, at the side opposite to the control bar (8), with a movable separator assembly (13) selectively displaceable between a closed resting position and an open working position in which it delimits a separate compartment (14) within the container (3).

## Description

The present invention relates to supermarket carts of the type comprising a base with wheels provided with a transverse control bar and bearing a basket container.

Preferably, but not necessarily, the invention relates more in particular to the carts of this kind in which both the base and the basket are made of moulded plastic material.

In supermarket carts of this kind there is the problem of subdividing and separating some products from others: for example, fresh products, or frozen products or else delicate products could be positioned in a different, and normally smaller, area of the basket from the one where the other products are placed.

According to a known solution to this problem, a wall or a fixed divider is provided, which extends between its lateral walls substantially over the entire height of the basket starting from its bottom wall.

This arrangement is not enough functional, because the volume within the basket that is reserved to the products to be separated from the others is considerable, and if it is filled at least to a substantial extent with the products to be separated, the unoccupied part is nonetheless unusable for the other products.

The object of the present invention is to overcome the aforesaid drawback, and this object is achieved by means of a supermarket cart of the type defined above, characterised in that the basket is provided, at the side opposite to the aforesaid control bar, with a movable separator assembly, selectively movable between a closed resting position and an open working position in which it delimits, within said basket, a separate compartment.

Thanks to this solution idea, the cart according to the invention makes available an optionally usable partition for housing products that require a physical separation from the other products placed in the cart and which, in the absence of this requirement, can be removed immediately.

According to a preferred embodiment of the invention, the separator assembly comprises a first and a second bulkhead positioned between the lateral walls of the basket and whereof the first bulkhead is connected in articulated fashion to the end wall of the basket opposite to the control bar at a distance from the bottom of the basket, in such a way as to be able to oscillate between a raised position in which it is positioned against the aforesaid end wall and a lowered position in which it is positioned substantially parallel to the bottom of the basket, and the second bulkhead is connected in pivotal and sliding fashion to the first bulkhead, in such a way as to be able to move parallel to the aforesaid end wall of the basket between an advanced position, in which it is positioned against the first bulkhead when it is in the raised position, and a rear position to delimit, with said bulkhead in the lowered position and with said lateral and end walls of the basket, the aforesaid separate compartment.

Advantageously, the second wall is connected to the lateral walls of the basket by means of a pair of oscillating arms, swingable between two opposite angular positions in which they are arranged substantially parallel to the bottom of the basket; positioner means borne by the lateral walls being provided to maintain said arms in one or in the other of said two opposite angular positions.

Thanks to this solution idea, the movable separator assembly in the closed resting position does not alter the volume available within the basket in any way at all, whilst in its open working position it reduces said volume to a marginal extent and anyway only starting from a certain distance from the bottom of the basket, where in any case the separate compartment defined thereby in said position is statistically sufficient to house the fresh, frozen or delicate products requiring a physical separation from the other products within the basket.

The invention shall now be described in detail with reference to the accompanying drawings, provided purely by way of non limiting example, in which:
- Figure 1 is a schematically and partially broken perspective view showing an embodiment of a supermarket cart according to the invention with the relative movable separator assembly in the closed resting position,
- Figure 2 is a similar view to Figure 1 with a movable separator assembly shown in the open working position, and
- Figures 3 and 4 are two perspective, fragmentary and enlarged scale views which show a detail of the movable separator assembly.

Referring to the drawings, the number 1 globally designates a supermarket cart according to the invention, essentially comprising a base 2 and a basket container 3.

In the case of the illustrated example, both the base 2 and the basket 3 are made of moulded plastic material: however, it is necessary to note that the invention can be applied with equal usefulness to different types of carts, in which one, the other or both components (base and basket) are for example metallic.

In the case of the illustrated example, the base 2 is constituted by a single piece defining a structure shaped substantially as a double L, with two horizontal branches 4 mutually connected anteriorly by a short transverse element 5 and joined posteriorly to two substantially vertical uprights 6 distanced from each other and extending upwards.

Normally swivelling wheels 7 are positioned respectively underneath the front ends of the horizontal elements 4 and underneath the lower ends of the uprights 6.

The tops of the two uprights 6 are interconnected by a transverse bar 8 for the manual operation of the cart 1.

The basket container 3 is also formed by a single piece whose lateral walls 9, bottom wall 10 and end wall 11, said end wall being opposite to the control bar 8, advantageously have a grid configuration.

The reference number globally designates a child seat assembly formed, briefly, by a seat and by a backrest, movable between a folded resting position and an open working position.

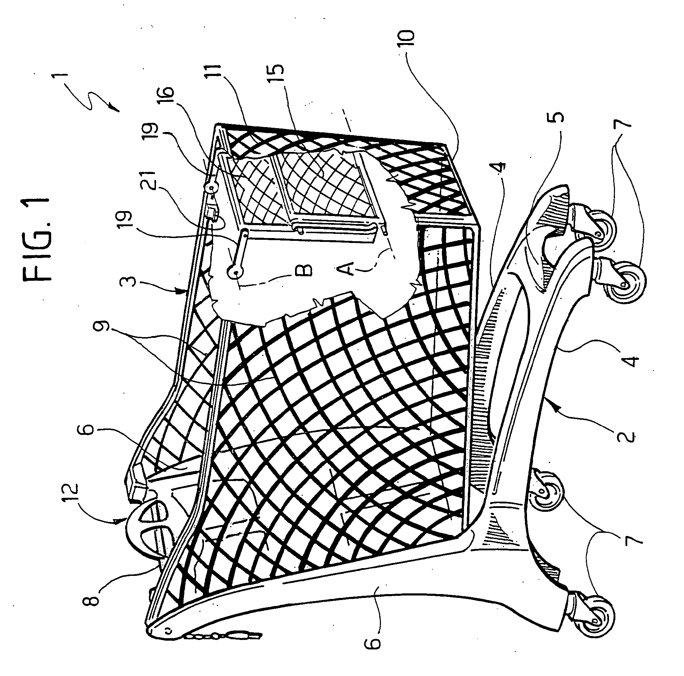

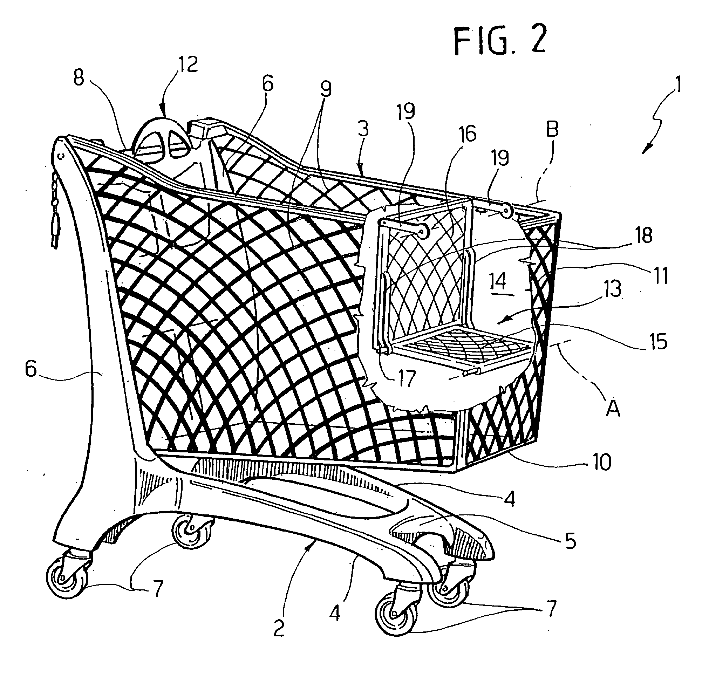

According to the fundamental characteristic of the invention the basket 3 is provided, in proximity with the end wall 11, with a movable separator assembly 13, selectively displaceable between a closed resting position shown in Figure 1 and an open working position shown in Figure 2, in which it delimits, inside the basket 3 and above the bottom wall 10 thereof, a separate compartment designated by the number 14. Said compartment can be usefully employed to contain fresh, delicate, frozen or other kinds of foods that need to be physically separated from the other products placed inside the basket 3.

In the case of the illustrated example, the movable separator assembly 13 comprises a first bulkhead 15 and a second bulkhead 16 whereof the first bulkhead 15 is articulated to the end wall 11 around a first transverse axis A distanced above the bottom wall 10 in such a way as to be able to oscillate between a substantially vertical raised position (Figure 1) and a substantially horizontal lowered position (Figure 2). The second bulkhead 16 is connected in pivotal and sliding fashion to the first bulkhead 15 in such a way as to be able to move parallel to the end wall 11 of the basket 3 between an advanced position (Figure 1) and a rear position (Figure 2) relative to said end wall 11. The pivotal and sliding coupling is obtained, for instance, by means of a pair of lateral pivots 17 projecting from the end of the first bulkhead 15 opposite to the axis of articulation A and engaged within corresponding lateral slits 18 of the second bulkhead 16.

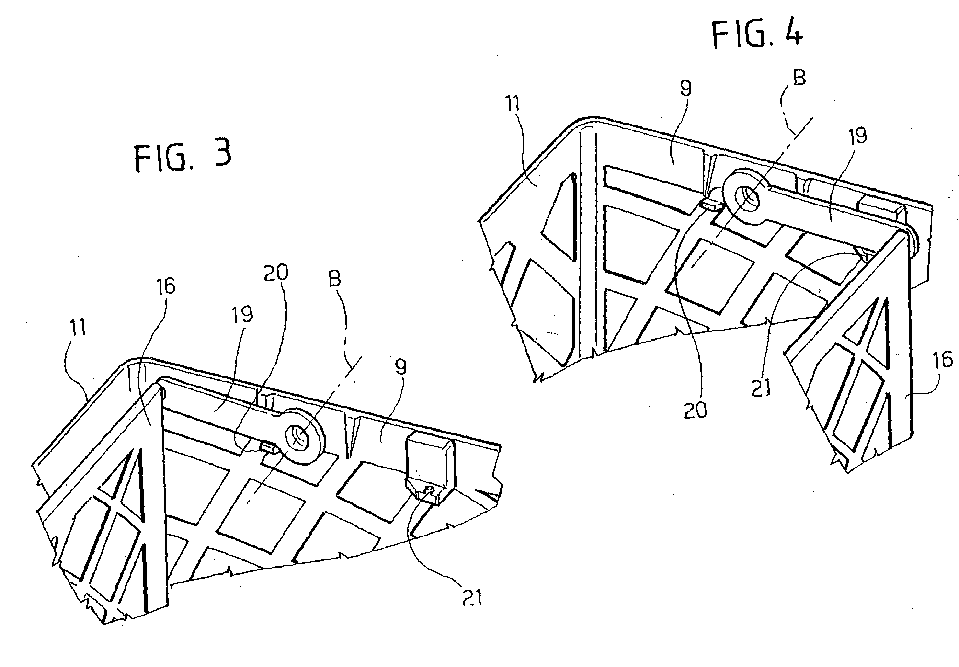

The second bulkhead 16 is connected superiorly to the lateral walls 9 of the basket 3 by means of a pair of oscillating arms 19 able to rotate around a second transverse axis B parallel to the axis A. As shown in greater detail in Figures 3 and 4, the arms 19 are angularly movable between two opposite positions in which they are positioned substantially parallel to the bottom 10 of the basket 3 and in which they are oriented respectively towards the end wall 11 and from the opposite part relative thereto. The first position corresponds to the closed resting position of the separator assembly 13, whilst the second position corresponds to the open working position of said separator assembly 13. To position the rotating arms 19 in one or in the other position, the lateral walls 9 of the basket 3 are provided with corresponding abutments 20, 21 whereof the first may be fitted with retaining members operating by pressure, friction or in snap-on fashion to prevent undesired movements of the movable separator assembly 13 from the closed resting position to the open working position.

As specified above, all the components of the described cart are made of moulded plastic material: however, it should again be stated that the invention can be applied with equal usefulness also to carts made of different material, for example partly or wholly metallic.

Naturally, the construction details and the embodiments may be widely varied from what is described and illustrated herein, without thereby departing from the scope of the present invention as defined in the claims that follow.

## Claims

1. A supermarket cart (1) comprising a base (2) with wheels (7) provided with a control bar (8) and bearing a basket container (3), **characterised in that** said basket container (3) is provided, at the side (11) opposite to said control bar (8), with a movable separator assembly (13) selectively displaceable between a closed resting position and an open working position in which it delimits within said container (3) a separate compartment (14).

2. A cart as claimed in claim 1, in which said basket container (3) has lateral walls (9) and an end wall (11) opposite to said control bar (8), **characterised in that** said movable separator assembly (13) comprises a first and a second bulkhead (15, 16) positioned between said lateral walls (9) of the container (3) and whereof the first bulkhead (15) is connected in articulated fashion to said end wall (11) at a distance from the bottom (10) of the container (3) in such a way as to be able to oscillate between a raised position in which it is positioned against said end wall (11)and a lowered position in which it is substantially parallel to the bottom (10) of the container (3), and the second bulkhead (16) is connected in pivotal and sliding fashion to the first bulkhead (15) in such a way as to be displaceable parallel to said end wall (11) of the container (3) between an advanced position, in which it is placed against said first bulkhead (15) when the bulkhead is in the raised position, and a rear position to delimit said separate compartment (14) with said first bulkhead in the lowered position and with said lateral walls (9) and end wall (11) of the container (3).

3. A supermarket cart as claimed in claim 2, **characterised in that** said second bulkhead (16) is connected to said lateral walls of the container (3) by means of a pair of oscillating arms (19), swingable between two opposite angular position in which they are positioned substantially parallel to the bottom (10) of the container (3); positioner means (20, 21) borne by said lateral walls (9) being provided to maintain said oscillating arms (19) in one or in the other two opposite angular position.

4. A supermarket cart as claimed in any of the previous claims, **characterised in that** said movable separator assembly (13) is made of moulded plastic material.

5. A supermarket cart as claimed in any of the previous claims, **characterised in that** said base (2) and said basket container (3) are made of moulded plastic material.
